# EUROPEAN PATENT APPLICATION

(11) **EP 4 703 305 A1**
(43) Date of publication of application: **04.03.2026**
(21) Application number: 25152411.2
(22) Date of filing: 17.01.2025
(51) Int. Cl.: B65H 1/04, B65H 1/14, B65H 3/06, B65H 7/02

(54) **RECORDING-MATERIAL-TRANSPORTING DEVICE**

(30) Priority: 27.08.2024 JP 2024145798
(71) Applicant: Fujifilm Business Innovation Corp., Tokyo 107-0052 (JP)
(72) Inventor: NAKATA, Ryusuke, Yokohama (JP)
(74) Representative: Meissner Bolte Partnerschaft mbB

(57) **Abstract**

A recording-material-transporting device (20) includes a stacking part (100) on which a recording material is stacked and that has a stacking angle varying depending on a stacking amount of recording materials stacked on the stacking part, a feed roller (110) that feeds a recording material stacked on the stacking part, and a contact part (140) with which a leading edge of a recording material fed by the feed roller is in contact, in which a setting position of the feed roller varies depending on the stacking angle of the stacking part based on the stacking amount of recording materials stacked on the stacking part.

## Description

### Background

### (i) Technical Field

The present disclosure relates to a recording-material-transporting device.

### (ii) Related Art

Japanese Unexamined Patent Application Publication No. 2007-055705 describes a challenge of providing a paper feeder applicable to a high-speed apparatus and capable of preventing multi-feed and no feed. To address such a challenge, Japanese Unexamined Patent Application Publication No. 2007-055705 describes a configuration including an inclined surface which the leading edge of the paper sheet fed from a feeding unit comes into contact with and climbs over and whose inclination angle is variable.

### Summary

Recording-material-transporting devices are installed to image reading apparatuses such as a stand-alone scanner and an image forming apparatus and feed recording materials with a feed roller. To separate recording materials, such recording-material-transporting devices employ a configuration in which preliminary separation is performed by pushing the leading edges of the recording materials to be fed, into a contact part such as an inclined guide.

Here, in the recording-material-transporting devices, when a stacking angle of the recording materials varies depending on a stacking amount of the recording materials, there may be a case where the recording materials fed from the feed roller do not come into contact with the contact part depending on the stacking angle of the recording materials. In this case, the preliminary separation effect on the recording materials, due to the contact part, is hardly stabilized.

Accordingly, it is an object of the present disclosure to stabilize the preliminary separation effect on recording materials to be fed, even when the stacking angle of the recording materials varies depending on the stacking amount of the recording materials, compared with when a feed roller is always set in the same position regardless of the stacking amount of the recording materials stacked on a stacking part.

According to a first aspect of the present disclosure, there is provided a recording-material-transporting device including a stacking part on which a recording material is stacked and that has a stacking angle varying depending on a stacking amount of recording materials stacked on the stacking part, a feed roller that feeds a recording material stacked on the stacking part, and a contact part with which a leading edge of a recording material fed by the feed roller is in contact, in which a setting position of the feed roller varies depending on the stacking angle of the stacking part based on the stacking amount of recording materials stacked on the stacking part.

According to a second aspect of the present disclosure, in the recording-material-transporting device according to the first aspect, in which the stacking part includes a main body and a stacking plate that rotates with an upstream side, in a recording-material-transporting direction, of the stacking part as a support, the stacking angle is an angle of the stacking plate relative to the main body, and a setting position of the feed roller when the stacking angle is large is set lower than a setting position of the feed roller when the stacking angle is small.

According to a third aspect of the present disclosure, in the recording-material-transporting device according to the second aspect, in which, before a first feed of a recording material is started, the stacking angle of the stacking plate is detected by referring to a lift-up time of the stacking plate.

According to a fourth aspect of the present disclosure, in the recording-material-transporting device according to the first aspect, in which a position of the feed roller is lowered below the setting position by a feed of a recording material stacked on the stacking part, and
the feed roller lowered below the setting position is pushed up by change in the stacking angle of the stacking part.

According to a fifth aspect of the present disclosure, in the recording-material-transporting device according to the fourth aspect, in which, when the feed roller lowered below the setting position by the feed of a recording material is pushed up by change in the stacking angle, the feed roller is pushed up to a position lower than the setting position that is a position when the feed of a recording material is started.

According to a sixth aspect of the present disclosure, in the recording-material-transporting device according to the fourth aspect, in which an interval of pushing up the feed roller lowered below the setting position by change in the stacking angle is shorter when the stacking angle is large than when the stacking angle is small.

According to a seventh aspect of the present disclosure, in the recording-material-transporting device according to the fourth aspect, in which, at a time of pushing up, by change in the stacking angle, the feed roller lowered below the setting position by the feed of a recording material, a change amount from a position of the feed roller before the change, to a setting position of the feed roller after the change is set smaller when the stacking angle is large than when the stacking angle is small.

According to an eighth aspect of the present disclosure, in the recording-material-transporting device according to the seventh aspect, in which the change amount is smaller when the feed of a recording material is started than after the feed of a recording material is started.

According to a ninth aspect of the present disclosure, in the recording-material-transporting device according to any one of the first to eighth aspects, in which a leading edge of a recording material fed by the feed roller is in contact with the contact part regardless of the stacking angle.

According to the first aspect of the present disclosure, a preliminary separation effect on a recording material to be fed can be stabilized even when the stacking angle of a recording material varies depending on the stacking amount.

According to the second aspect of the present disclosure, the preliminary separation effect can be stabilized even when the stacking angle is large.

According to the third aspect of the present disclosure, the stacking angle can be detected even when recording materials differ in type.

According to the fourth aspect of the present disclosure, even when the feed roller is lowered below the setting position, the feed roller can be pushed up again to a setting position in which the preliminary separation effect is exhibited.

According to the fifth aspect of the present disclosure, the setting position can be adjusted according to the stacking angle of the stacking part as occasion arises.

According to the sixth aspect of the present disclosure, the setting position of the feed roller can be controlled more precisely in the case of the large stacking angle that is a state where the preliminary separation effect is hardly stabilized.

According to the seventh aspect of the present disclosure, even when the stacking angle is large, the position of the feed roller during continuous transport of recording materials can be adjusted to a position in which the preliminary separation effect is stabilized.

According to the eighth aspect of the present disclosure, the change amount can be adjusted according to the stacking angle of the stacking part as occasion arises.

According to the ninth aspect of the present disclosure, the preliminary separation effect on recording materials to be fed can be stabilized even when the stacking angle of the recording material varies.

### Brief Description of the Drawings

An exemplary embodiment of the present disclosure will be described in detail based on the following figures, wherein:
Fig. 1 illustrates the overall configuration of an image reading apparatus;
Fig. 2 is a diagram illustrating a rotation mechanism of a stacking plate in a document stacking part;
Fig. 3 illustrates the positional relationship between a light-shield sensor and a feed roller;
Fig. 4 is a flowchart illustrating a control process of the feed roller when feeding a document;
Fig. 5 is a flowchart illustrating a process in a feed in a first setting position;
Fig. 6 is a flowchart illustrating a process in a feed in a second setting position;
Figs. 7A, 7B, and 7C illustrate change in the position of the feed roller when a stacking amount of documents is large; and
Figs. 8A, 8B, and 8C illustrate change in the position of the feed roller when the stacking amount of documents is small.

### Detailed Description

### Description of Image Reading Apparatus

Hereinafter, an exemplary embodiment according to the present disclosure will be described with reference to the accompanying drawings.

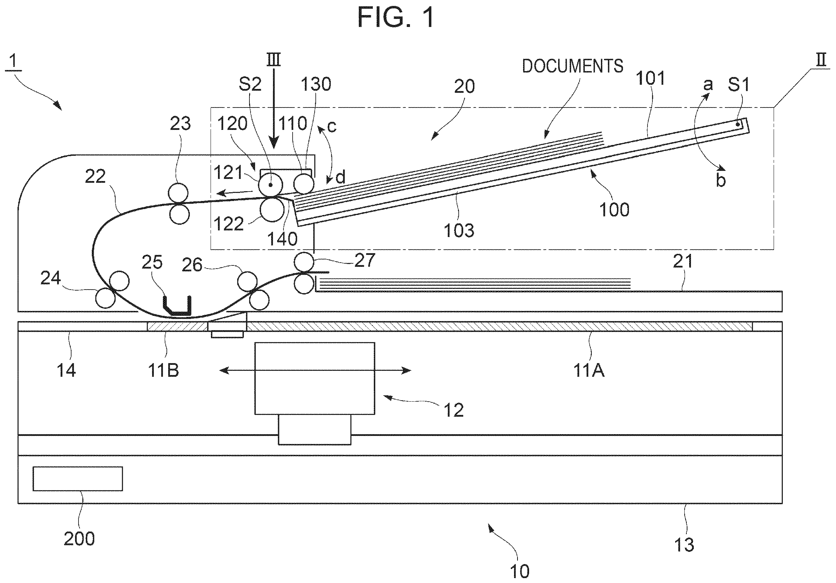

Fig. 1 illustrates the overall configuration of an image reading apparatus 1.

The image reading apparatus 1 includes a scanning device 10 that obtains an image belonging to a document by scanning the document and a document feeder 20 that transports a document to the scanning device 10. Note that the document is one example of a recording material, and the document feeder 20 is one example of a recording-material-transporting device.

The document feeder 20 includes a document stacking part 100 on which a document bundle constituted by plural documents is stacked. The document stacking part 100 includes a stacking plate 101 that rotates in a direction a or in a direction b with the upstream side thereof in a document feeding direction as a support S1 and a main body 103 supporting the stacking plate 101. The document feeder 20 also includes a discharged-paper-stacking part 21 that is provided below the document stacking part 100 and on which the document that has been read is stacked. Note that the document stacking part 100 is one example of a stacking part.

The document feeder 20 also includes a feed roller 110 that feeds the document on the document stacking part 100. The document feeder 20 further includes a separation mechanism 120 that, while separating, handles the documents fed by the feed roller 110 one by one and transports the documents downstream. The separation mechanism 120 includes a paper feeding roller 121 that transports the documents downstream and a separation roller 122 that, while separating, handles the documents one by one. The paper feeding roller 121 is fixed with the support S2 as an axis.

The document feeder 20 also includes a blanket 130 holding the feed roller 110 and the paper feeding roller 121. Thus, the feed roller 110 is rotatable, with the support S2 as the rotation center, in a direction c in which the feed roller 110 rises or in a direction d in which the feed roller 110 moves down.

The document feeder 20 also includes a guide member 140 that allows the leading edge of the document fed by the feed roller 110 to come into contact therewith and guides the document to the separation mechanism 120. The guide member 140 is provided between the feed roller 110 and the separation mechanism 120. The guide member 140 is provided so as to be inclined from an end of the document stacking part 100 toward an end of a transport path 22 (described later). The guide member 140 has a function of performing so-called "preliminary separation" for preventing plural documents from entering the separation mechanism 120. Note that the guide member 140 is one example of a contact part.

Further, on the transport path 22 through which a document is transported, there are provided a transport roller 23 that transports, toward a roller on the downstream side, the documents that have been separated into individual sheets and a registration roller 24 that supplies the documents while subjecting registration adjustment to the scanning device 10.

In addition, a chute 25 that aids in the transport of the document being read by the scanning device 10 and an output roller 26 that transports the document having been read further downstream are provided. A discharge roller 27 that discharges the document to the discharged-paper-stacking part 21 is further provided.

The scanning device 10 includes an accommodation housing 13 and a device frame 14.

The device frame 14 is installed with a first platen glass 11A on which a document being stationary is placed and a second platen glass 11B allowing the light for reading the document transported by the document feeder 20, to pass therethrough.

Inside the accommodation housing 13, a reading unit 12 that reads the document placed on the first platen glass 11A and the document transported by the document feeder 20 is also provided.

A movement mechanism (not illustrated) that moves the reading unit 12 in a left-right direction in the figure is further provided. The movement mechanism is not particularly limited and is constituted by a known mechanism.

When reading the document placed on the first platen glass 11A, the reading unit 12 moves rightward under the first platen glass 11A.

When reading the document transported by the document feeder 20, the reading unit 12 stays stationary under the second platen glass 11B.

Inside the reading unit 12, there are provided a light source constituted by, for example, an LED, an imaging optical system that condenses the reflection light off a document, and a light receiving sensor that receives the light condensed by the imaging optical system.

A hinge (not illustrated) for opening and closing the document feeder 20 is provided on the rear side of the image reading apparatus 1, and the document feeder 20 is rotated to the rear side of the image reading apparatus 1 in the present exemplary embodiment.

When placing a document on the first platen glass 11A, a user rotates the document feeder 20 to the rear side of the image reading apparatus 1.

The user places the document on the first platen glass 11A and then rotates the document feeder 20 to the front side of the image reading apparatus 1 to return the document feeder 20 to the original position.

Subsequently, in the present exemplary embodiment, the user pushes a start button (not illustrated) to start the reading of the document.

The image reading apparatus 1 also includes a controller 200 that controls each part of the image reading apparatus 1. The controller 200 includes a central processing unit (CPU) configured to control the entire operation of the apparatus and performs, for example, the control of a setting position of the feed roller 110 in the present exemplary embodiment.

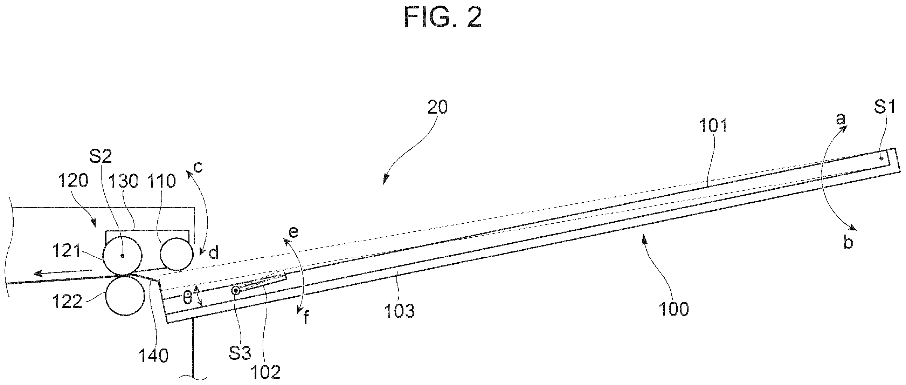

Fig. 2 is a diagram illustrating a rotation mechanism of the stacking plate 101 in the document stacking part 100. The stacking plate 101 is provided with a raising member 102 for rotating the stacking plate 101 in a direction e in which the raising member 102 raises the stacking plate 101 or in a direction f in which the raising member 102 moves down the stacking plate 101. The raising member 102 has a support S3 in the main body 103, rotates about the support S3, and comes into contact with a bottom portion of the stacking plate 101 to push up the stacking plate 101. The raising member 102 is rotated in the direction e or in the direction f by a motor (not illustrated).

By the rotation of the raising member 102 in the direction e or in the direction f, the stacking plate 101 is rotated, with the support S1 as the rotation center, in a direction a in which the stacking plate 101 moves toward the feed roller 110 or in a direction b in which the stacking plate 101 moves away from the feed roller 110. At this time, a stacking angle of the stacking plate 101 in the document stacking part 100 is changed. The stacking angle refers to the angle of, relative to the main body 103, the stacking plate 101 that rotates with the support S2 positioned on the upstream side of the document stacking part 100 in a transport direction as the rotation center. That is, the stacking angle refers to, with an initial state of the stacking plate 101 as a reference, the angle formed by change of the stacking plate 101 from the initial state. The initial state refers to the state before the first rotation of the stacking plate 101 is started. In Fig. 2, the stacking plate 101 in the initial state rotates in the direction a, and the stacking angle becomes θ.

In the present exemplary embodiment, the stacking angle varies depending on a stacking amount of the documents stacked on the document stacking part 100. The stacking angle is small when the stacking amount of the documents is large, and the stacking angle is large when the stacking amount of the documents is small.

Note that, in the present exemplary embodiment, the rotation of the stacking plate 101 in the direction a is sometimes referred to as "lift up", and the rotation of the stacking plate 101 in the direction b is sometimes referred to as "lift down".

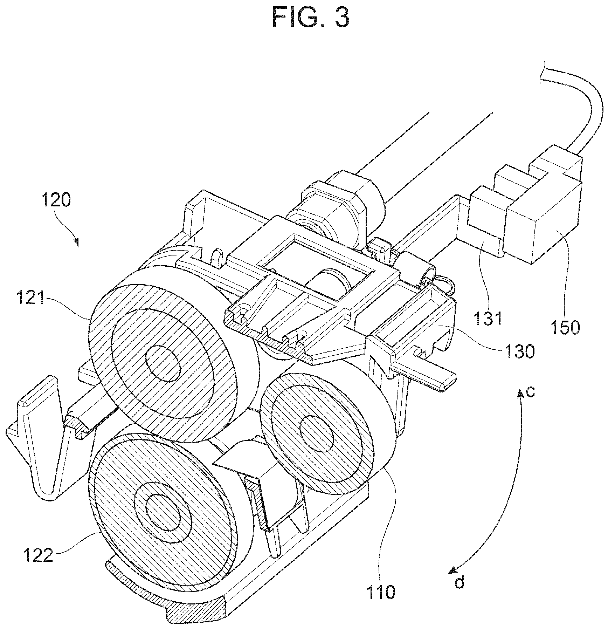

Fig. 3 illustrates the positional relationship between a light-shield sensor 150 and the feed roller 110, and, here, Fig. 1 is viewed in a direction III. The document feeder 20 includes the light-shield sensor150 that detects the height of the feed roller 110 by the passing of a light-shield member 131. The blanket 130 is provided with the light-shield member 131 that shields the light-shield sensor 150 from light. The feed roller 110 and the light-shield member 131 are formed so as to operate in an interlocked manner via the blanket 130. When the feed roller 110 rotates in the direction c or in the direction d, the light-shield member 131 also rotates in the direction c or in the direction d.

### Control of Setting Position of Feed Roller

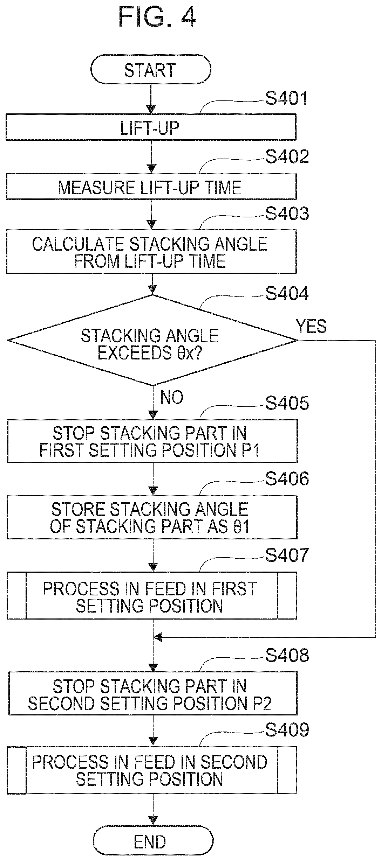

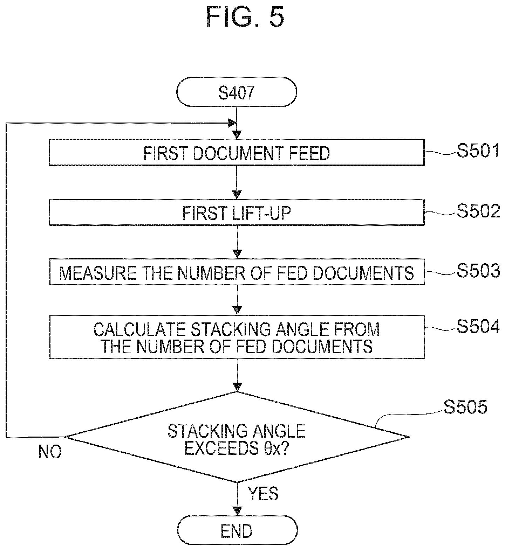

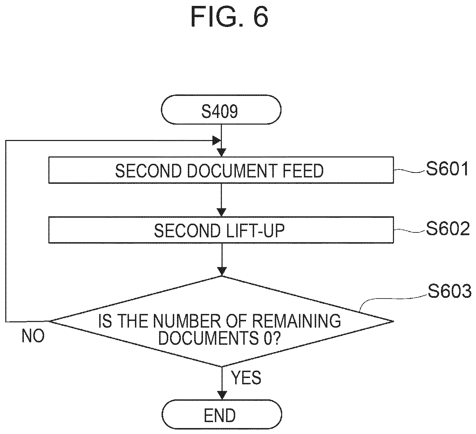

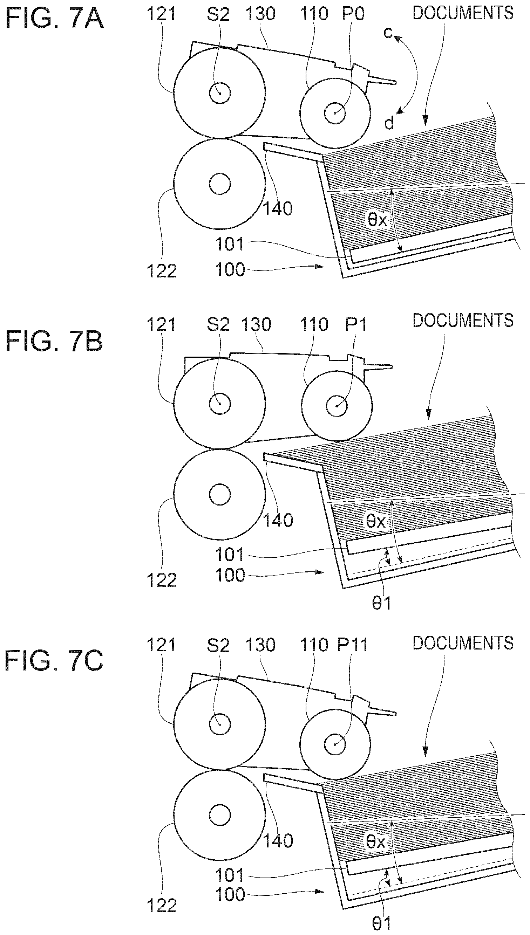

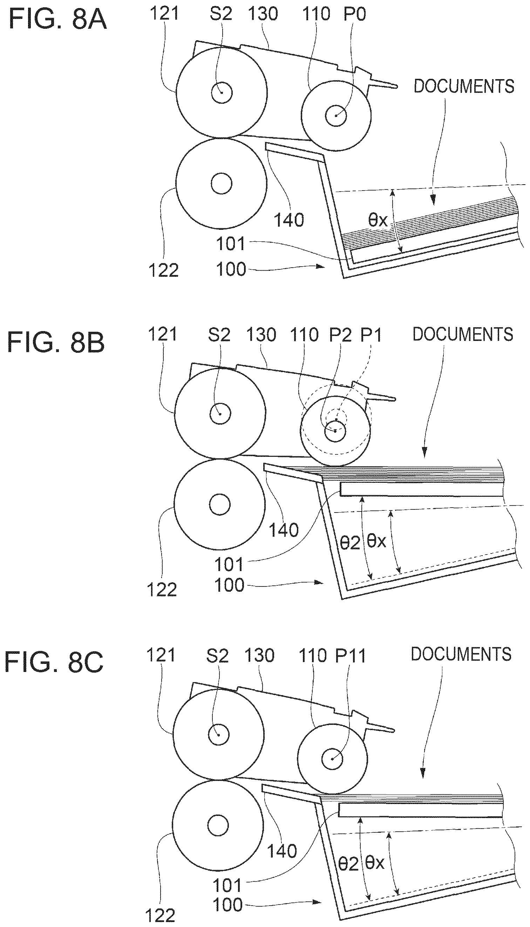

A control process, executed by the controller 200, on the feed roller 110 when feeding a document will be described with reference to Figs. 4 to 8. Fig. 4 is a flowchart illustrating the control process of the feed roller 110 when feeding a document. Fig. 5 is a flowchart illustrating a process in a feed in a first setting position. Fig. 6 is a flowchart illustrating a process in a feed in a second setting position. Figs. 7A to 7C illustrate change in the position of the feed roller 110 when the stacking amount of documents is large. Figs. 8A to 8C illustrate change in the position of the feed roller 110 when the stacking amount of documents is small. Here, Fig. 7A illustrates the state where the feed roller 110 is in an initial position P0. Fig. 7B illustrates the state after the feed roller 110 has been pushed up to a first setting position P1. Fig. 7C illustrates the state where the feed roller 110 has moved down to a position P11. Fig. 8A illustrates the state where the feed roller 110 is in the initial position P0. Fig. 8B illustrates the state after the feed roller 110 has been pushed up to the second setting position P2. Fig. 8C illustrates the state where the feed roller 110 has moved down to the position P11.

First, when there is provided an instruction to feed documents, the controller 200 performs lift-up of the stacking plate 101 from the state illustrated in Fig. 7A or Fig. 8A to start a first feed of documents (Step 401). At this time, when the feed roller 110 comes into contact with a document on the document stacking part 100, the blanket 130 provided with the feed roller 110 rotates in the direction c with the support S2 as the rotation center, and the feed roller 110 gradually moves upward from the initial position P0. The initial position P0 refers to the initial position before the change in the position of the feed roller 110 is started.

Next, the controller 200 measures a lift-up time it takes for the feed roller 110 to pass through the light-shield sensor 150 (refer to Fig. 3) from the initial position P0 (Step 402). The lift-up time varies depending on the stacking amount of documents, in the document feeder 20 to which the present exemplary embodiment is applied. Here, the lift-up time in the case of a small stacking amount of documents as in Fig. 8A is longer than that in the case of a large stacking amount of documents as in Fig. 7A. Note that the lift-up time is not necessarily the time it takes for the feed roller 110 to pass through the light-shield sensor 150 and may be, for example, the time at which a few seconds have elapsed since the feed roller 110 passed through the light-shield sensor 150.

After measuring the lift-up time, the controller 200 calculates the stacking angle from the lift-up time (Step 403). Here, the longer the lift-up time, the larger the stacking angle. Moreover, the controller 200 determines whether the stacking angle exceeds θx (Step 404).

This angle θx refers to the angle predetermined as the stacking angle serving as a reference for determining the setting position of the feed roller 110. When the stacking angle is smaller than θx, the angle at which the leading edge of a document bundle is in contact with the guide member 140 is large. That is, the stacking angle becomes closer to the orthogonal direction. On the other hand, when the stacking angle is larger than θx, the angle at which the leading edge of the document bundle is in contact with the guide member 140 is in a direction along the guide member 140. That is, the stacking angle becomes close to the parallel direction. Thus, to maintain the separation function imparted to the guide member 140, the setting position of the feed roller 110 is varied before and after reaching the stacking angle θx.

When determining that the stacking angle does not exceed θx (NO in Step 404), the controller 200 stops the stacking plate 101 of the document stacking part 100 in the first setting position P1 as illustrated in Fig. 7B (Step 405). In Fig. 7B, the stacking angle is brought to θ1 by the lift-up of the stacking plate 101. By bringing the stacking angle to θ1, the feed roller 110 is rotated in the direction c with the support S2 as the rotation center. The feed roller 110 is pushed up to the first setting position P1 illustrated in Fig. 7B from the initial position P0 illustrated in Fig. 7A.

The first setting position P1 is a position in which, for example, the leading edge of a document bundle of about 10 sheets is in contact with the guide member 140 when the stacking angle is θ1. Note that, in the present exemplary embodiment, the feed roller 110 is pushed up to the first setting position P1 by lifting up the stacking plate 101. However, the feed roller 110 may be stopped in the first setting position, for example, by combining the lift-up and the lift-down according to the position of the sensor.

After stopping the stacking plate 101 in the first setting position P1 in Step 405, the controller 200 stores the stacking angle as θ1 (Step 406). The controller 200 then proceeds to a subroutine for performing processes in the feed in the first setting position (Step 407). After ending the subroutine in Step 407, the controller 200 stops, by a second lift-up (described later), the stacking plate 101 of the document stacking part 100 in the second setting position P2 (Step 408). Subsequently, the controller 200 proceeds to a subroutine for performing processes in the feed in the second setting position (Step 409). After ending Step 409, the controller 200 ends the control process of the feed roller 110 when feeding documents. Note that the processes in the feed in the first setting position will be described later with reference to Fig. 5. In addition, the processes in the feed in the second setting position will be described later with reference to Fig. 6.

Returning to Step 404, when the controller 200 determines that the stacking angle exceeds θx (YES in Step 404), the controller 200 stops the stacking plate 101 of the document stacking part 100 in the second setting position P2 as illustrated in Fig. 8B (Step 408). In Fig. 8B, the stacking angle is brought to θ2 larger than θ1 by lifting up the stacking plate 101. By bringing the stacking angle to θ2, the feed roller 110 is rotated in the direction c with the support S2 as the rotation center. The feed roller 110 is pushed up to the second setting position P2 illustrated in Fig. 8B from the initial position P0 illustrated in Fig. 8A.

The second setting position P2 is lower than the first setting position P1. The second setting position P2 is a position in which, for example, the leading edge of a document bundle of about 3 sheets is in contact with the guide member 140 when the stacking angle is θ2.

After stopping the stacking plate 101 in the second setting position P2 in Step 408, the controller 200 proceeds to the subroutine for performing the processes in the feed in the second setting position P2 (Step 409). The controller 200 then ends the control process.

Next, the processes in the feed in the first setting position P1, that is, the subroutine in Step 407 will be described with reference to the flowchart in Fig. 5. First, in the state illustrated in Fig. 7B, the controller 200 performs a first document feed (Step 501). The first document feed is started from the documents in contact with the guide member 140, in order, on a one-by-one basis, and the documents of about 10 sheets in contact with the guide member 140 are fed. When the first document feed ends, as illustrated in Fig. 7C, the position of the feed roller 110 in contact with the document bundle has shifted down to the position P11 from the first setting position P1 without change in the stacking angle θ1 of the stacking plate 101. At this time, the feed roller 110 has moved down under its own weight.

Subsequently, the controller 200 performs a first lift-up (Step 502). The stacking plate 101 is raised in the direction a (refer to Fig. 1), and the feed roller 110 is pushed up again to the first setting position P1 that is the position after the change of the feed roller 110, from the position P11 that is the position before the change of the feed roller 110. Thus, the first lift-up is performed. With the first lift-up, the leading edge of a document bundle of about 10 sheets comes into contact with the guide member 140 again. Note that a first change amount is defined as the amount by which the stacking angle is changed by the first lift-up.

The controller 200 then measures the number of the documents fed after the stacking angle is brought to θ1 (Step 503). Next, the controller 200 calculates the stacking angle from the number of the documents fed after the stacking angle is brought to θ1 (Step 504). When determining that the stacking angle exceeds θx (YES in Step 505), the controller 200 ends the processes in the feed in the first setting position.

When the stacking angle does not exceed θx (NO in Step 505), the controller 200 performs the processes of Steps 501 to 504 again. That is, when the stacking angle does not exceed θx, the first document feed and the first lift-up are executed repeatedly.

Next, the processes in the feed in the second setting position P2, that is, the subroutine in Step 409 will be described with reference to the flowchart in Fig. 6. First, in the state illustrated in Fig. 8B, the controller 200 performs a second document feed (Step 601). The second document feed is started from the documents in contact with the guide member 140, in order, on a one-by-one basis, and documents of about 3 sheets in contact with the guide member 140 are fed. When the second document feed ends, as illustrated in Fig. 8C, the position of the feed roller 110 in contact with the document bundle has shifted down to the position P11 from the second setting position P2 without change in the stacking angle θ2. At this time, the feed roller 110 has moved down under its own weight.

Subsequently, the controller 200 performs the second lift-up (Step 602). The stacking plate 101 is raised in the direction a (refer to Fig. 1), and the feed roller 110 is pushed up again to the second setting position P2 that is the position after the change of the feed roller 110, from the position P11 that is the position before the change of the feed roller 110. Thus, the second lift-up is performed. With the second lift-up, the leading edge of a document bundle of about 3 sheets comes into contact with the guide member 140 again.

Note that a second change amount is defined as the amount by which the stacking angle is changed by the second lift-up. At this point, it is set that the second change amount is smaller than the first change amount.

The controller 200 then determines whether the number of remaining documents is 0 (Step 603). When the number of the remaining documents is 0 (YES in Step 603), the controller 200 ends the processes in the feed in the second setting position. When the number of the remaining documents is not 0 (NO in Step 603), the controller 200 performs the processes of Steps 601 to 602 again. That is, when the number of the remaining documents is not 0, the second document feed and the second lift-up are executed repeatedly.

Here, T1 is defined as the interval of repetition of the first document feed and the first lift-up illustrated in Fig. 5. T2 is defined as the interval of repetition of the second document feed and the second lift-up illustrated in Fig. 6. In this case, the second document feed is smaller in the number of the fed documents and thus shorter in the time of the feed process than the first document feed. In addition, the second lift-up is smaller in the change amount of the lift-up and thus shorter in the time of the lift-up process than the first lift-up. Thus, T2 is shorter than T1.

Note that, in Fig. 4, the processes in the feed in the first setting position (Step 407) ends, and the controller 200 stops the stacking plate 101 of the document stacking part 100 in the second setting position P2 (Step 408). In this case, the controller 200 pushes up, by the second lift-up, the feed roller 110 that has been lowered below the first setting position P1 by the first document feed. That is, the controller 200 pushes up the feed roller 110 to the second setting position P2 lower than the first setting position P1 that is the position when the first document feed is started. In addition, in this case, the second change amount due to the second lift-up, which is the change amount after the first document feed is started, is smaller than the first change amount due to the first lift-up, which is the change amount when the first document feed is started.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A recording-material-transporting device comprising:
   a stacking part on which a recording material is stacked and that has a stacking angle varying depending on a stacking amount of recording materials stacked on the stacking part;
   a feed roller that feeds a recording material stacked on the stacking part; and
   a contact part with which a leading edge of a recording material fed by the feed roller is in contact, wherein:
      a setting position of the feed roller varies depending on the stacking angle of the stacking part based on the stacking amount of recording materials stacked on the stacking part.
(((2))) The recording-material-transporting device according to (((1))), wherein:
   the stacking part includes a main body and a stacking plate that rotates with an upstream side, in a recording-material-transporting direction, of the stacking part as a support,
   the stacking angle is an angle of the stacking plate relative to the main body, and
   a setting position of the feed roller when the stacking angle is large is set lower than a setting position of the feed roller when the stacking angle is small.
(((3))) The recording-material-transporting device according to (((2))), wherein:
   before a first feed of a recording material is started, the stacking angle of the stacking plate is detected by referring to a lift-up time of the stacking plate.
(((4))) The recording-material-transporting device according to (((1))), wherein:
   a position of the feed roller is lowered below the setting position by a feed of a recording material stacked on the stacking part, and
   the feed roller lowered below the setting position is pushed up by change in the stacking angle of the stacking part.
(((5))) The recording-material-transporting device according to (((4))), wherein:
   when the feed roller lowered below the setting position by the feed of a recording material is pushed up by change in the stacking angle, the feed roller is pushed up to a position lower than the setting position that is a position when the feed of a recording material is started.
(((6))) The recording-material-transporting device according to (((4))), wherein:
   an interval of pushing up the feed roller lowered below the setting position by change in the stacking angle is shorter when the stacking angle is large than when the stacking angle is small.
(((7))) The recording-material-transporting device according to (((4))), wherein:
   at a time of pushing up, by change in the stacking angle, the feed roller lowered below the setting position by the feed of a recording material, a change amount from a position of the feed roller before the change, to a setting position of the feed roller after the change is set smaller when the stacking angle is large than when the stacking angle is small.
(((8))) The recording-material-transporting device according to (((7))), wherein:
   the change amount is smaller when the feed of a recording material is started than after the feed of a recording material is started.
(((9))) The recording-material-transporting device according to any one of (((1))) to (((8))), wherein:
   a leading edge of a recording material fed by the feed roller is in contact with the contact part regardless of the stacking angle.

According to (((1))) of the present disclosure, a preliminary separation effect on a recording material to be fed can be stabilized even when the stacking angle of a recording material varies depending on the stacking amount.

According to (((2))) of the present disclosure, the preliminary separation effect can be stabilized even when the stacking angle is large.

According to (((3))) of the present disclosure, the stacking angle can be detected even when recording materials differ in type.

According to (((4))) of the present disclosure, even when the feed roller is lowered below the setting position, the feed roller can be pushed up again to a setting position in which the preliminary separation effect is exhibited.

According to (((5))) of the present disclosure, the setting position can be adjusted according to the stacking angle of the stacking part as occasion arises.

According to (((6))) of the present disclosure, the setting position of the feed roller can be controlled more precisely in the case of the large stacking angle that is a state where the preliminary separation effect is hardly stabilized.

According to (((7))) of the present disclosure, even when the stacking angle is large, the position of the feed roller during continuous transport of recording materials can be adjusted to a position in which the preliminary separation effect is stabilized.

According to (((8))) of the present disclosure, the change amount can be adjusted according to the stacking angle of the stacking part as occasion arises.

According to (((9))) of the present disclosure, the preliminary separation effect on recording materials to be fed can be stabilized even when the stacking angle of the recording material varies.

## Claims

1. A recording-material-transporting device comprising:
a stacking part on which a recording material is stacked and that has a stacking angle varying depending on a stacking amount of recording materials stacked on the stacking part;
a feed roller that feeds a recording material stacked on the stacking part; and
a contact part with which a leading edge of a recording material fed by the feed roller is in contact, wherein:
a setting position of the feed roller varies depending on the stacking angle of the stacking part based on the stacking amount of recording materials stacked on the stacking part.

2. The recording-material-transporting device according to claim 1, wherein:
the stacking part includes a main body and a stacking plate that rotates with an upstream side, in a recording-material-transporting direction, of the stacking part as a support,
the stacking angle is an angle of the stacking plate relative to the main body, and
a setting position of the feed roller when the stacking angle is large is set lower than a setting position of the feed roller when the stacking angle is small.

3. The recording-material-transporting device according to claim 2, wherein:
before a first feed of a recording material is started, the stacking angle of the stacking plate is detected by referring to a lift-up time of the stacking plate.

4. The recording-material-transporting device according to any one of the previous claims, wherein:
a position of the feed roller is lowered below the setting position by a feed of a recording material stacked on the stacking part, and
the feed roller lowered below the setting position is pushed up by change in the stacking angle of the stacking part.

5. The recording-material-transporting device according to claim 4, wherein:
when the feed roller lowered below the setting position by the feed of a recording material is pushed up by change in the stacking angle, the feed roller is pushed up to a position lower than the setting position that is a position when the feed of a recording material is started.

6. The recording-material-transporting device according to either claim 4 or claim 5, wherein:
an interval of pushing up the feed roller lowered below the setting position by change in the stacking angle is shorter when the stacking angle is large than when the stacking angle is small.

7. The recording-material-transporting device according to any one of claims 4 to 6, wherein:
at a time of pushing up, by change in the stacking angle, the feed roller lowered below the setting position by the feed of a recording material, a change amount from a position of the feed roller before the change, to a setting position of the feed roller after the change is set smaller when the stacking angle is large than when the stacking angle is small.

8. The recording-material-transporting device according to claim 7, wherein:
the change amount is smaller when the feed of a recording material is started than after the feed of a recording material is started.

9. The recording-material-transporting device according to any one of claims 1 to 8, wherein:
a leading edge of a recording material fed by the feed roller is in contact with the contact part regardless of the stacking angle.
